Europäisches Patentamt

European Patent Office

Office européen des brevets

(11) Publication number: 0 280 200 B1

# EUROPEAN PATENT SPECIFICATION

(45) Date of publication of patent specification: 06.05.92

(51) Int. Cl.⁵: **F02B 71/04**, F01B 11/08, F04B 17/00, F04B 1/16

(21) Application number: 88102393.1

(22) Date of filing: 18.02.88

(54) **Power aggregate.**

(30) Priority: 25.02.87 FI 870801
02.02.88 FI 880462

(43) Date of publication of application:
31.08.88 Bulletin 88/35

(45) Publication of the grant of the patent:
06.05.92 Bulletin 92/19

(84) Designated Contracting States:
AT BE CH DE ES FR GB GR IT LI LU NL SE

(56) References cited:
DE-A- 1 626 398      DE-A- 2 012 730
DE-A- 2 621 016      DE-A- 3 300 199
FR-A- 2 143 621      US-A- 3 995 974

(73) Proprietor: SAMPOWER OY
PL 50
SF-14201 Turenki(FI)

(72) Inventor: Sampo, Matti
Iso-Hiisi
SF-14200 Turenki(FI)

(74) Representative: Gossel, Hans K., Dipl.-Ing.
Lorenz-Seidler-Gossel et al
Widenmayerstrasse 23
W-8000 München 22(DE)

## Description

The present invention relates to a power aggregate, comprising:
- a body
- an internal combustion engine with at least one engine cylinder mounted on the body,
- a reciprocating engine piston in the engine cylinder,
- a piston rod fastened to the engine piston to be reciprocated therewith, and
- a power output unit, comprising a pump cylinder and a pump piston which is fixed to the piston rod.

This type of power aggregate is disclosed in US Patent specification No. 3 089 305. This type of power aggregate offers a plurality of advantages over the available power aggregates in which the pump and the engine are independent units and a rotating engine crankshaft must be connected through the intermediary of a rotating power output shaft to a rotating pump transmission shaft. Such advantages include:
- an essentially simpler and more compact design since rotating components are eliminated and the engine and the pump provide structurally and functionally a single unit
- avoiding the problems involved in linking together an engine and a separate pump
- the engine power contributes more effectively than before directly to the pressurization of hydraulic fluid.

Despite these essential advantages, however, the above type of power aggregate has not advanced beyond a testing stage. One important reason for this seems to be that there is no successful solution to power output and distribution to service points. If a piston rod is provided with just one concentric hydraulic cylinder, a problem will be how to control its output within sufficiently wide limits and how to distribute it to different service points with mutually independent power demands.

From the US-A 3 995 974 it is known that the cylinders each have control valve means for joining controlling the output of each cylinder. In this known state of the art a control valve is shown and described which is not capable for separately controlling the outputs of the pump cylinders but it is capable and particularily designed for disconnecting pump cylinders in a pre-set order while the power stroke advances.

A general object of the invention is to further develop the above type of power aggregate for making the an operation of its engine pistons as effective as possible and for converting it directly into the power aggregate output which is qualitatively and quantitatively adaptable to the mutually independent demands of different applications.

A particular object of the invention ist to provide a power aggregate whose hydraulic power can be distributed in a simple fashion to different drive motors and working tools, so that the operation of each motor and working tool can be readily and independently regulated.

A further object of the invention is to provide an effective and, in view of its output, a compact power aggregate, whereby the operating energy (hydraulic, electric or pneumatic) for the driving motors and working tools of a machine can be produced as directly as possible in a desired form.

In order to achieve these purposes, a power aggregate of the invention possesses the characterizing features set forth in the annexed claims.

One embodiment of the invention will now be described with reference made to the accompanying drawings, in which

fig. 1    shows a power aggregate of the invention in axial longitudinal section and

fig. 2    shows diagrammatically an application of the power aggregate.

The engine section 1 of a power aggregate includes two coaxial engine cylinders 14 whose engine pistons 2 are rigidly linked together by means of a rod 6, serving as a common piston rod for pistons 2. The body of a power aggregate comprises piston rod 6 surrounding annular members 27, 3a, 3b, 27a, which are mounted axially one after the other. Between engine cylinders 14 and body members 27, 27a is a compressor 15, comprising a compressor cylinder 16 and a compressor piston 19 fixed to the base of piston 2. The compressor further includes an intake air duct 18 fitted with a back-pressure valve 18a and a scavenging air duct 17 connecting compressor cylinder 16 to engine cylinder 14. A back-pressure valve 17a in duct 17 is not necessary for operating the device. The end of compressor cylinder 16 facing the engine is provided with a breather port 20 opening to atmosphere.

A hydraulic pump section is generally designated with reference numeral 3 and includes axially spaced ring members 3a and a ring member 3b therebetween. Each ring member 3a is provided with a plurality of axially directed pump cylinders 5, spaced at suitable distances over the circumference of ring member 3a. The rod-like pistons 4 in cylinders 5 are fixed to a flange 4a carried by ring member 3b and fastened to piston rod 6. Said flange 4a can of course be replaced by radial rods. Each pump cylinder 5 is provided with hydraulic fluid intake and delivery ducts 9 and 10 (not specified in the drawing). The number of hydraulic cylinders 5 depends on a particular application. The minimum number is two pump cylinders in one stroke direction. A single double-piston engine can also include 3 pieces of pump cylinders, two smaller ones being directed in one direction and the larger one in the opposite direction. As a kind of rating, it could be said that in most practical applications the number of cylinders 5 should be at least 6. Generally, the demand is no more than 30. The power aggregates can be constructed with various numbers of cylinders simply by manufacturing the components 3a, 3b, 4a and 4 so as to correspond to the required number and size of cylinders. This requirement is determined on the basis of the number and size of hydraulic motors and actuator cylinders in a working machine. It is often preferable to provide two or more piston-cylinder units 4, 5 to operate a single drive motor or actuator cylinder, the driving or running speed being adjustable by switching one or more piston-cylinder units 4, 5 for operation and the rest for free circulation of the hydraulic liquid.

For the production of electricity the piston rod 6 is fitted with a magnet 22 which, as the motor is running, travels back and forth past the poles of an iron core 23 of a winding 24. The winding 24 together with its iron core 23 is fastened to the annular body member 27a. The drawing shows a skeleton example. In practice, the magnet 22 and iron core 23 can have several poles both axially one after the other and laterally side by side. The hydraulic pump 3 is the main power source and the electric generator section indicated by reference numeral 21 is an auxiliary power source, used for charging the battery of a working machine. Electric generator 21 can also be used as an engine starting motor. In this case, its output must be designed to be sufficient for setting the engine pistons in a reciprocating motion whose stroke gradually increases sufficiently to produce in either engine cylinder a pressure required for the ignition of fuel.

Several applications require also compressed air. This is provided by a pneumatic compressor 25 whose piston 26 is concentrically fixed to piston rod 6 inside cylinder 27. Both ends of cylinder 27 are provided with intake air ducts 29 fitted with back-pressure valves 28 and compressed air ducts 30 fitted with back-pressure valves 31, said piston 26 effecting an expansion stroke in both directions.

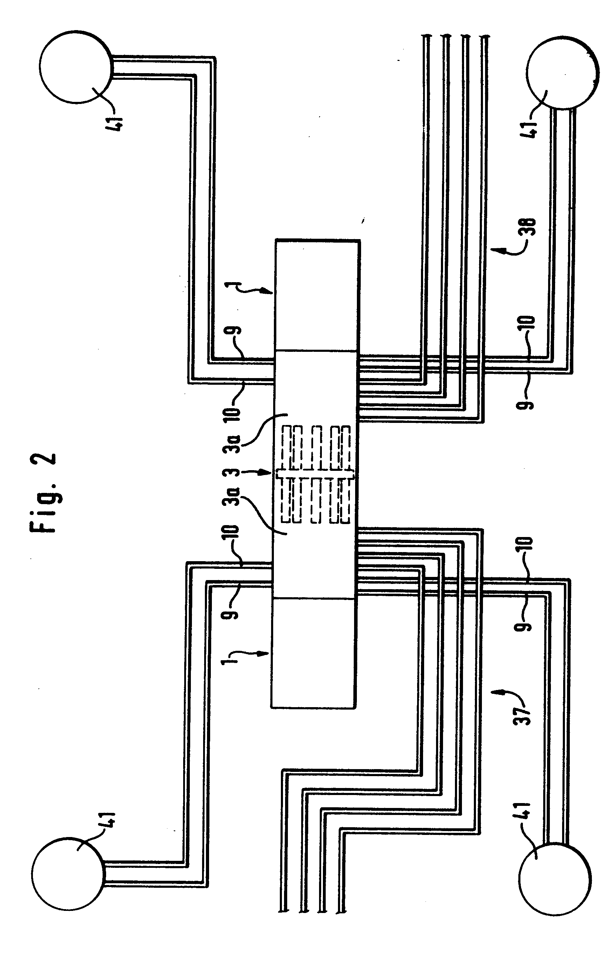

In fig. 2 is shown an example for applying a power aggregate of the invention to a working machine, comprising four pieces of drive motors 41, carried by the wheel hubs and each separately connected through its own pressure and return conduit 9, 10 to the power aggregate pump section 3. Such arrangement is well suitable for all four-wheel driven vehicles, such as automobiles. In working machine applications, from both cylinder units 3a of pump section 3 extend a plurality of pressure and return conduits 37 and 38 which are connected to the operating cylinder of a working machine as well as to the cylinders and/or motors of working equipment. Examples of such working machine applications include chassis-controlled maintenance machines and farming machines.

The pump section 3 includes at least four equal-sized piston-cylinder units 4, 5 for operating drive motors 41. In addition to these, there will be a number of piston-cylinder units 4, 5 required by the working equipment. In view of the power control it is preferable if there are several piston-cylinder units 4, 5 for a single drive motor or working tool.

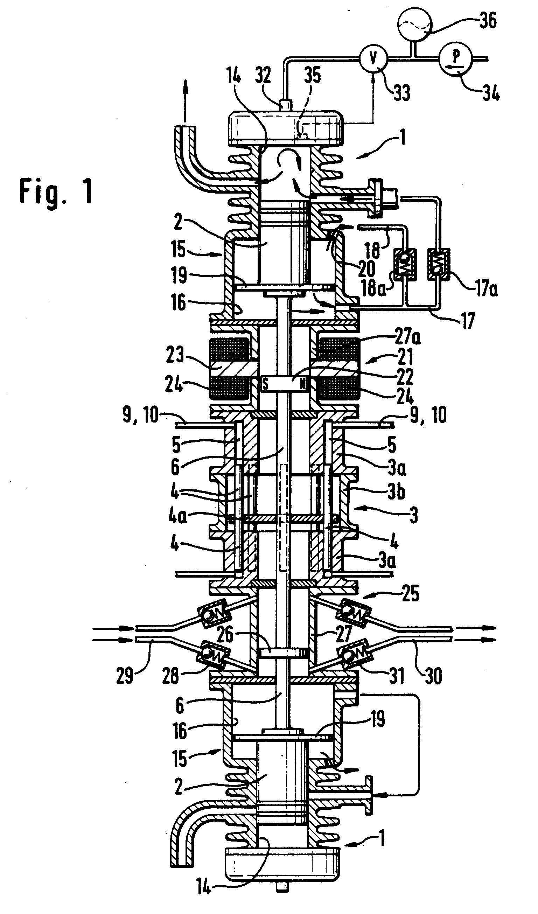

The operation of a power aggregate proceeds as follows. The start-up is effected e.g. electrically by means of generator unit 21. The start-up can also be effected from a compressed-air accumulator by means of compressor element 25 or from a hydraulic fluid pressure accumulator through the intermediary of pump section 3. If the engine operates on a two-stroke diesel principle, the start-up can be facilitated by using a glow plug. Fuel injection nozzles 32 can be coupled to receive their operating power from piston rod 6 (principally the same way as hydraulic pumps 4, 5). Alternatively, it is possible to employ electrically operated or electrically controlled injection pumps. An essential feature is that injection pumps or nozzles 32 receive their operation timing on the basis of the position of engine piston 2 or on the basis of the pressure prevailing in cylinder 14 or on the basis of the combined effect of these two. Fig. 1 shows a high-pressure pump 34 for supplying fuel to injection nozzle 32 by way of a valve 33. The opening of valve 33 is controlled by a pressure sensor 35 of cylinder 14. A pressure accumulator 36 equalizes the liquid fuel supply pressure. Valve 33 shuts off after a certain delay time. The engine output can be controlled by adjusting said delay time i.e. the duration of injection period. The start-up can be effected by using a relatively low compression for the ignition of fuel provided that a glow plug is utilized. The first expansion stroke already creates a substantially higher compression in the opposite engine cylinder 14 with a more effective explosion therein and compression increases again in the opposite cylinder 14. Since the operation proceeds on a two-stroke principle, said compressor 15 has an essential significance for the engine output. Since the diameter of a compressor cylinder 16 exceeds that of engine cylinder 14, the amount of scavenging air will be sufficient for the effective exhaustion of combustion gases. This ensures that the power aggregate produces a high output with respect to its size. The timing of liquid fuel injection has a particular significance in connection with a compressor-effected scavenging. Thus, the entire combustion chamber can be completely scavenged before the liquid fuel is supplied into the cylinder.

In other words, the injection of liquid fuel into cylinder 14 is not effected until all ports of cylinder 14 are shut off.

If, e.g. due to a disturbance in liquid fuel supply, there is no ignition in one engine cylinder 14, the air in said cylinder compresses and stops piston 2 before it hits the cylinder cover. Since the compression in this situation does not exceed the normal expansion stroke pressure, the engine shall not be damaged as a result of this disturbance or malfunction.

As far as the invention is concerned, a diesel principle is obviously preferred also for the reason that then the moment of ignition will be automatically adjusted optimal and the timing of ignition need not be separately taken care of by special mechanical or electronic equipment. It is self-evident, however, that also an Otto-cycle engine with electric ignition as well as valve engines and four-stroke engines could be used.

As the power aggregate is running, one or a plurality of hydraulic pumps 4, 5 provide hydraulic fluid for their own motor or cylinder whose operation can thus be controlled separately and independently. The control can be effected e.g. by regulating the intake pressure of pump cylinders 5 by adjusting the opening degree of a back-pressure valve fitted in the intake duct. This creates a negative pressure in the pump cylinder and the cylinder is only partly filled with oil. It is also possible to employ other per se known valve solutions, such as a valvistor or other proportional valves in the pressure ducts.

A particularly preferred situation is accomplished by combining in a common pressure duct 9 two pump cylinders 5 provided in different ring members 3a for double pulse frequency and lower pulse amplitude. In this case, a pressure accumulator is not always required but the inherent volume and flexibility of hydraulic hoses serves as a pressure accumulator for equalizing the pressure delivered to the engine. However, the use of hydraulic pressure accumulators offers many useful extra properties, such as possible hydraulic engine start-up or storage of a vehicle braking energy. The braking energy stored in a pressure accumulator can be exploited in a per se known manner for acceleration at the time of take-off. A third application of pressure accumulators can be the control of the engine stroke frequency by means of hydraulic counterpressure without any loss of power.

The above embodiment has not been described in view of limiting the invention in any way. A detailed construction may be varied in many ways. For example, the engine pistons 2 can be combined with each other in many different ways to operate in alternating strokes. Pistons 2 can be parallel and their piston rods can be journalled to the ends of a rocker arm. The engine can also be designed to operate in a manner that the engine pistons are not mechanically linked together but adapted to travel more or less independently of each other. In this case, a reverse stroke (scavenging and compression) is effected by means of springs. A variation of this invention is a solution in which a plurality of engine units are connected in parallel to provide a single power aggregate. In a variation of the invention it is also possible that a pressure duct 10 coming out of a single pump cylinder 5 forks for two or more drive motors or actuators provided, however, that a multi-piston principle of the invention is simultaneously utilized for hydraulic power output.

## Claims

1.  A power aggregate, comprising
    - a body
    - an internal combustion engine (1) having at least one engine cylinder (14) mounted on the body.
    - a reciprocating engine piston (2) in the engine cylinder,
    - a piston rod (6) fastened to said engine piston (2) to be reciprocated therewith, and
    - a power output unit, comprising at least three separate pump cylinders (5) and at least three separate pump pistons (4) which are fixed to piston rod (6),

    each pump cylinder (5) being provided with hydraulic fluid intake and pressure ducts (9,10) which connect said pump cylinders (5) to a drive motor (41) or an actuator cylinder,
    **characterized in**
    that at least two of said pump cylinders (5) have different diameters and the pressure ducts (9) of said at least two pump cylinders each have control valve means for separately and independently controlling the outputs of said at least two pump cylinders having different diameters.

2.  A power aggregate as set forth in claim 1, characterized in that a plurality of pump pistons (4) are fixed in parallel relationship through the intermediary of radial rods or a flange (4a) to said piston rod (6) and that at least two separate pump pistons (4) having different diameters point in the same direction, thus performing their expansion stroke simultaneously in the same direction.

3. A power aggregate as set forth in claim 1 characterized in that the power output unit comprises at least four equal-sized piston-cylinder units (4,5) and at least one piston-cylinder unit of different size.

4. A power aggregate as set forth in claim 1 or 2, in which at least two hydraulic piston-cylinder units (4,5) having different diameters are connected to one drive drive motor or actuator cylinder by means of pressure ducts (9) having valves for switching optionally one or more of said pressure ducts (9) to said drive motor or to a free circulation duct, which is connected to reservoir of the hydraulic liquid.

5. A power aggregate as set forth in claim 1 or 2 characterized in that the body comprises a plurality of axially successive annular members (27,3a,3b), which surround piston rod (6) and two of which axially spaced annular members (3a) carry said pump cylinders (5) opposite to each other, and two pump cylinders (5), carried by different annular members (3a), are combined to a common pressure duct (9).

6. A power aggregate as set forth in claim 1 or 2, whose engine is a compressor-equipped twostroke engine whose compressor comprises
   - at least one compressor-cylinder 16, which is disposed as an axial extension of engine cylinder (14) and whose diameter exceeds that of said engine cylinder,
   - a compressor piston (19), fitted in compressor cylinder (16) and fixed to the base of engine piston (2) or to piston rod (6) linking said engine pistons (2) together and
   - an intake air duct (18), connected to the compressor and fitted with a back-pressure valve (18a), and a scavenging air duct (17) linking compressor cylinder (16) to engine cylinder (14),
   characterized in that the start of the injection of a liquid fuel direct-injection system is controlled on the basis of the position of piston rod (6) and/or the pressure prevailing in engine cylinder (14) in a manner that the injection shall not be started until all ports (exhaust port and scavenging air port) of cylinder (14) are shut off.

7. A power aggregate as set forth in claim 6, characterized in that the end of compressor cylinder (16) facing the engine is provided with a breather port (20) opening to atmosphere.

8. A power aggregate as set forth in claim 1 or 4, in a self-mobile vehicle fitted with hydraulic drive motors, each drive motor (41) being linked by means of a hydraulic pressure duct (9) to several pump cylinders (5) such that there is direct hydraulic liquid communication between the pump cylinders (5) and the drive motor (41).

9. A power aggregate as set forth in claim 1 or 4, in a self-mobile working machine fitted with hydraulic drive motors and cylinders and/or motors for working equipment, characterized in that said drive motors (41) or drive motors pairwise as well as the cylinders and/or motors of working equipment are each linked to several pump cylinders (5) by means of a hydraulic pressure duct.

**Revendications**

1. Agrégat de puissance, du type comprenant :
   - un corps;
   - un moteur à combustion interne (1) ayant au moins un cylindre de moteur (14) monté sur le corps;
   - un piston de moteur monté en va et vient (2) dans le cylindre du moteur;
   - une tige de piston (6) attachée audit piston du moteur (2) de façon à effectuer le mouvement de va et vient avec celui-ci; et
   - une unité de sortie en puissance, comprenant au moins trois cylindres séparés de pompage (5) ainsi qu'au moins trois pistons de pompage séparés (4) qui sont fixés à la tige de piston (6),
   chacun des cylindres de pompage (5) étant pourvu d'une admission de fluide hydraulique ainsi que de conduits de pression (9, 10) qui connectent lesdits cylindres de pompage (5) à un moteur d'entraînement (41) ou à un cylindre déclencheur, caractérisé en ce qu'au moins deux des cylindres de pompage (5) ont des diamètres différents et les conduits de pression (9) d'au moins deux des cylindres de pompage ont chacun des moyens formant soupape de commande pour contrôler séparément et indépendamment l'échappement des deux cylindres de pompage au moins précités qui possèdent des diamètres différents.

2. Agrégat de puissance selon la revendication 1, caractérisé en ce qu'une pluralité de pistons de pompage (4) sont fixés parallèlement par l'intermédiaire de tiges radiales ou d'un épaulement (4a) sur ladite tige de piston (6), et en ce qu'au moins deux des pistons de pompage séparés (4) ont des points de diamètre différents dans la même direction, exécutant ainsi leur débattement en extension simultanément et suivant la même direction.

3. Agrégat de puissance selon la revendication 1, caractérisé en ce que l'unité de sortie en puissance comprend au moins quatre unités formant piston cylindre de taille égale (4, 5) ainsi qu'au moins une unité formant piston-cylindre de taille différente.

4. Agrégat de puissance selon l'une des revendications 1 ou 2, dans lequel au moins deux des unités hydrauliques formant piston-cylindre (4, 5) ayant des diamètres différents sont connectés à un moteur d'entraînement ou cylindre déclencheur au moyen de conduites de pression (9) possédant des soupapes pour commuter optionnellement au moins l'une desdites conduites de pression (9) avec le moteur d'entraînement ou une conduite à circulation libre, qui est connectée au réservoir de liquide hydraulique.

5. Agrégat de puissance selon la revendication 1 ou 2, caractérisé en ce que le corps comprend une pluralité d'éléments annulaires successivement axiaux (27, 3a, 3b) qui entoure la tige de piston (6), dont deux qui sont des éléments annulaires espacés axialement (3a) supportent lesdits cylindres de pompage (5) en opposition l'un avec l'autre, et deux cylindres de pompage (5) étant supportés par des éléments annulaires différents (3a), sont combinés à une conduite commune de pression (9).

6. Agrégat de puissance selon la revendication 1 ou 2, dont le moteur est un moteur à deux temps équipé d'un compresseur, le compresseur comprenant :
   - au moins un cylindre compresseur (7), qui est disposé suivant une extension axiale du cylindre du moteur (14), et dont le diamètre excède celui du cylindre du moteur;
   - un piston compresseur (19), monté dans un cylindre de compresseur (16) et fixé à la base du piston du moteur (2) ou de la tige de piston (6) reliant lesdits pistons de moteur (2) ensemble; et
   - une conduite d'admission d'air (18), connectée au compresseur et montée avec une soupape de pression en retour (18a), ainsi qu'une conduite d'air d'évacuation (17) qui relie le cylindre de compresseur (16) à un cylindre de moteur (14);

   caractérisé en ce que le début de l'injection d'un système d'injection directe de carburant liquide est commandée sur la base de la position de la tige de piston (6) et/ou de la pression se prévalant dans le cylindre de moteur (14), de façon que l'injection ne peut pas commencer jusqu'à ce que toutes les lumières (lumières d'échappement et lumières d'évacuation d'air) du cylindre (14) soient fermées.

7. Agrégat de puissance selon la revendication 6, caractérisé en ce que l'extrémité du cylindre de compresseur (16) qui fait face au moteur est pourvue d'une lumière de mise à l'air (20) qui débouche vers l'atmosphère.

8. Agrégat de puissance selon la revendication 1 ou 4, caractérisé en ce qu'un véhicule automobile équipé avec des moteurs à entraînement hydraulique, chacun de ces moteurs d'entraînement (41) étant relié au moyen d'une conduite de pression hydraulique (9) avec plusieurs des cylindres de pompage (5) de manière à obtenir une communication directe du liquide hydraulique entre les cylindres de pompage (5) et le moteur d'entraînement (41).

9. Agrégat de puissance selon la revendication 1 ou 4, dans une machine utilitaire automobile équipée de moteur hydraulique d'entraînement et de cylindre et/ou de moteur pour un équipement utilitaire, caractérisé en ce que les moteurs d'entraînement (41) ou les moteurs d'entraînement pour lesquels aussi bien les cylindres et/ou les moteurs de l'équipement utilitaire sont chacun reliés à plusieurs cylindres de pompage (5) au moyen de conduites de pression hydraulique.

**Patentansprüche**

1. Ein Kraftaggregat mit
   - einem Gehäuse
   - einer verbrennungskraftmaschine (1) mit mindestens einem im Gehäuse eingebauten Zylinder (14),
   - einem im Zylinder sich hin und her bewegenden Motorkolben (2),
   - einer am genannten Motorkolben (2) befestigten Kolbenstange (6), die sich mit diesem hin und her bewegt, und
   - einer Leistung abgebenden Einheit, welche mindestens drei getrennte Pumpenzylinder (5) und mindestens drei getrennte mit der Kolbenstange (6) verbundene Pumpenkolben (4) aufweist,
   wobei jeder Pumpenzylinder (5) mit Einlaß- und Druckleitungen (9,10) versehen ist, welche die genannten Pumpenzylinder (5) mit einem Antriebsmotor (41) oder mit einem Antriebszylinder verbunden sind,
dadurch gekennzeichnet,
daß mindestens zwei der genannten Pumpenzylinder (5) unterschiedliche Durchmesser aufweisen, und daß die Druckleitungen (9) der genannten mindestens zwei Pumpenzlinder jeweils eine Ventileinrichtung aufweisen, mit welcher die Fördermenge der genannten mindestens zwei Pumpenzylinder mit verschiedenen Durchmessern getrennt und unabhängig voneinander geregelt werden kann.

2. Kraftaggregat nach Anspruch 1, dadurch gekennzeichnet, daß eine Mehrzahl von Pumpenkolben (4) mittels radialer Stangen oder eines Flansches (4a) parallel zueinander an der genannten Kolbenstange (6) befestigt sind, und daß mindestens zweigetrennte Pumpenkolben (4) mit verschiedenen Durchmessern in dieselbe Richtung weisen, so daß sie ihren Expansionshub gleichzeitig in dieselbe Richtung ausführen.

3. Kraftaggregat nach Anspruch 1, dadurch gekennzeichnet, daß die Leistung liefernde Einheit mindestens vier gleich große Kolben-Zylinder-Einheiten (4,5) und mindestens eine Kolben-Zylinder-Einheit davon verschiedener Größe aufweist.

4. Kraftaggregat nach Anspruch 1 oder 2, in welchem mindestens zwei Kolben-Zylinder-Einheiten (4,5) mit verschiedenen Durchmessern mit einem Antriebsmotor oder einem Antriebszylinder über Druckleitungen(9) verbunden sind, in die Ventile eingebaut sind, mit welchen wahlweise eine oder mehrere der genannten Druckleitungen (9) mit dem genannten Antriebsmotor oder mit einer Umlaufleitung verbunden werden können, der zum Behälter der Hydraulikflüssigkeit führt.

5. Kraftaggregat nach Anspruch 1 oder 2, dadurch gekennzeichnet, daß das Gehäuse eine Mehrzahl von axial hintereinander angeordneten Ringelementen (27,3a,3b) aufweist, welche rund um die Kolbenstange (6) liegen, wobei zwei der in axialem Abstand angeordneten Ringelemente (3a) die genannten gegenüberliegenden Pumpenzylinder (5) tragen, und wobei die zwei Pumpenzylinder (5), welche von verschiedenen Ringelementen (3a) getragen werden, in eine gemeinsamen Druckleitung (9) führen.

6. Kraftaggregat nach Anspruch 1 oder 2, dessen Motor eine aufgeladene Zweitaktmaschine ist, deren Kompressor folgendes aufweist:
- mindestens einen Kompressor-Zylinder- (16), welcher an einer axialen Verlängerung des Motorzylinders (14) befestigt ist, und dessen Durchmesser größer als jener des genannten Motorzylinders ist,
- einen im Kompressorzylinder (16) angebrachten Kompressor-Kolben (19), welcher am Boden des Motorkolbens (2) oder an der Kolbenstange (6) befestigt ist, wodurch die genannten Motorkolben (2) miteinander verbunden werden und
- einen an den Kompressor angeschlossener Lufteinlaßkanal (18), welcher mit einem Rückschlagventil (18a) versehen ist, und einen Spülluftkanal (17), welcher den Kompressor-Zylinder (16) mit dem Motorzylinder (14) verbindet,
dadurch gekennzeichnet, daß das Starten des Einspritzens eines Direkt-Einspritzsystems für den Kraftstoff in Abhängigkeit von der Lage der Kolbenstange (6) und/oder des im Motorzylinder (14) herrschenden Druckes so gesteuert wird, daß das Einspritzen nicht erfolgt, bevor nicht alle Öffnungen (Auslaßkanal und Spülluftkanal) des Zylinders (14) geschlossen sind.

7. Kraftaggregat nach Anspruch 6, dadurch gekennzeichnet, daß das gegen den Motor weisende Ende des Kompressor-Zylinders (16) mit einem nach außen offenen Lüftungskanal (20) versehen ist.

8. Kraftaggregat nach Anspruch 1 oder 4, ein selbstfahrendes mit hydraulischen Antriebsmotoren ausgestattetes Fahrzeug, wobei jeder Antriebsmotor (41) über eine hydraulische Druckleitung (9) an mehrere Pumpenzylinder (5) angeschlossen ist, so daß für die hydraulische Flüssigkeit eine direkte Verbindung zwischen den Pumpenzylindern (5) und dem Antriebsmotor (41) besteht.

9. Kraftaggregat nach Anspruch 1 oder 4, eine selbstfahrende Arbeitsmaschine, die mit hydraulischen Antriebsmotoren und Zylindern und/oder Motoren für die Arbeitsantriebe ausgerüstet ist, dadurch gekennzeichnet, daß die genannten Antriebsmotore (41) ebenso wie die Zylinder und/oder Motoren der Arbeitsausrüstung jeweils paarweise an verschiedene Pumpenzylinder (5) über hydraulische Druckleitungen angeschlossen sind.

Fig. 1

Fig. 2